# EUROPÄISCHE PATENTSCHRIFT

(11) **EP 0 587 605 B1**
(45) Veröffentlichungstag und Bekanntmachung des Hinweises auf die Patenterteilung: **05.04.1995**
(21) Anmeldenummer: 92910562.5
(22) Anmeldetag: 29.05.1992
(51) Int. Cl.: G01L 23/22

(54) **VERFAHREN ZUR KLOPFERKENNUNG**
PINKING DETECTION PROCESS
PROCEDE POUR LA DETECTION DU CLIQUETIS

(30) Priorität: 31.05.1991 DE 4117807
(43) Veröffentlichungstag der Anmeldung: 23.03.1994
(73) Patentinhaber: ROBERT BOSCH GMBH, 70442 Stuttgart (DE)
(72) Erfinder: DIETSCHE, Karl-Heinz, D-7257 Hirschlanden (DE); REIN, Christian, D-7536 Ispringen (DE)
(86) Internationale Anmeldenummer: DE9200438
(87) Internationale Veröffentlichungsnummer: WO9221950

(56) Entgegenhaltungen:
- EP-A- 0 175 915
- EP-A- 0 421 952
- EP-A- 0 458 993
- WO-A-89/11088
- US-A- 4 699 106

## Beschreibung

### Stand der Technik

Die Erfindung betrifft ein Verfahren zur Klopferkennung für Brennkraftmaschinen mit mehreren Zylindern, wobei die Auzahe der Klopfsensoren kleiner ist als die Auzahe der Zylinder. Es ist bereits ein Verfahren diese Art vorgeschlagen worden, bei dem einem Vier-Zylindermotor einer Brennkraftmaschine ein gemeinsamer Klopfsensor am Motorblock zugeordnet ist. Dieser Klopfsensor erfaßt für jeden Zylinder über einen bestimmten Kurbelwellenwinkel den Geräuschpegel in dem betreffenden Zylinder. Das so erfaßte Klopfsensorsignal wird über diesen Kurbelwellenbereich integriert. Die Signale, die der Klopfsensor liefert, werden dabei zylinderindividuell verstärkt. Da die unterschiedlichen Zylinder von dem Klopfsensor, aufgrund seines Anbauortes, unterschiedlich laut gehört werden, ergeben sich für die Zylinder unterschiedliche Referenzpegel. Die Verstärkung des erfaßten Referenzpegels erfolgt aufgrund der unterschiedlichen Lautstärken mit unterschiedlichen Faktoren. Für einen objektiven Vergleich der einzelnen Referenzpegel RP wird ein normierter Referenzpegel RPn ermittelt, indem man den Referenzpegel RP durch den zylinderindividuellen Verstärkungsfaktor dividiert. Diese so ermittelten normierten Referenzpegel bilden die Grundlage für die Klopferkennung, da gemessene Klopfintegrale bezogen auf den Referenzpegel im Normalbetrieb, das heißt bei Betrieb mit nichtklopfendem Motor, ausgewertet werden. Bei diesem bekannten Verfahren wird zunächst der Mittelwert R̅P̅n̅ aller normierten Referenzpegel RPn gebildet. Der Quotient des normierten Referenzpegels RPn eines Zylinders und des Mittelwertes R̅P̅n̅ aller Zylinder bestimmt den Bereich in einem Klopferkennungsfaktorkennfeld, aus welchen ein Klopferkennungsfaktor (K-Faktor) zu entnehmen ist. Dieses K-Faktoren-Kennfeld ist aufgespannt über den normierten Referenzpegel RPn und die Drehzahl. Der ermittelte K-Faktor (K) wird mit dem Referenzpegel RP multipliziert und bestimmt so die Klopfschwelle.

Bei diesem Verfahren wird von dem Sensor, der aufgrund des Anbauortes im Motorblock eigentlich normale Geräusche in einem bestimmen Zylinder lauter hört, die Auswahl des K-Faktors verfälscht. Das heißt, der Sensor gibt für einen gut hörbaren Zylinder einen höheren Referenzpegel zur Auswertung ab. Dadurch wird der Quotient von dem normierten Referenzpegel dieses Zylinders und dem Mittelwert R̅P̅n̅ größer als für die anderen Zylinder. Aufgrund dessen wird der K-Faktor einem anderen Bereich des Kennfeldes entnommen, so daß die Klopfschwelle für diesen Zylinder heruntergesetzt wird. Das hat zur Folge, daß bereits ein normaler Geräuschpegel fälschlicherweise zur Klopferkennung führen kann. Im umgekehrten Fall würde für einen Zylinder, der aufgrund eines ungünstigen Sensor-Anbauortes weniger gut gehört wird und somit kleinere Klopfintegrale liefert, die Klopfschwelle heraufgesetzt werden. Ein tatsächliches Klopfen in diesem Zylinder würde unter Umständen nicht erkannt werden.

Aus EP-A- 0 098 584 ist ein Verfahren zur Klopferkennung bekannt, bei dem die über einen Bandpass gefilterten Klopfsignale von einem Komparator mit einem Referenzwert verglichen werden. Wenn die Klopfsignale größer als der Referenzwert sind, wird vom Komparator ein Impuls ausgegeben. Diese Impulse werden aufintegriert und mit einer zylinderspezifisch festgelegten Klopfschwelle verglichen. Diese zylinderspezifisch festgelegte Klopfschwelle ist ein direktes Entscheidungskriterium. Mit diesem Verfahren kann die Sensorempfindlichkeit nicht berücksichtigt werden, da die zylinderindividuellen Größen nicht schon vor dem Vergleich mit dem Referenzpegel berücksichtigt werden.

Weiterhin ist aus EP-A-0 421 952 ein Verfahren zur Klopferkennung bekannt, bei dem für jeden einzelnen Zylinder ein Schwellwert zum Vergleich mit dem Ausgangssignal des Klopfsensors gebildet wird. Die Zuordnung der Sensor- und Schwellwertpegel zum jeweiligen Zylinder ist über eine Messung der Winkelstellung einer Motorwelle realisiert.

### Vorteile der Erfindung

Das erfindungsgemäße Verfahren mit den Merkmalen des Anspruchs 1 hat dem gegenüber den Vorteil, daß durch die Zuordnung eines Bewertungsfaktors für jeden Zylinder für unterschiedlich "laute" Zylinder, die durch den Sensor-Anbauort bedingt sind, der Klopferkennungsfaktor für jeden Zylinder bei nichtklopfendem Motor einem mittleren Bereich entnommen wird.

Durch die in den abhängigen Ansprüchen aufgeführten Maßnahmen ist eine vorteilhafte Weiterbildung und Verbesserung des im Anspruch 1 angegebenen Verfahrens möglich. Besonders vorteilhaft ist, daß durch die Berechnung des mittleren Referenzpegels im Normalbetrieb bei nichtklopfendem Motor für jeden Zylinder auf einen genau definierten Bereich im K-Faktoren-Kennfeld zugegriffen werden kann.

### Zeichnung

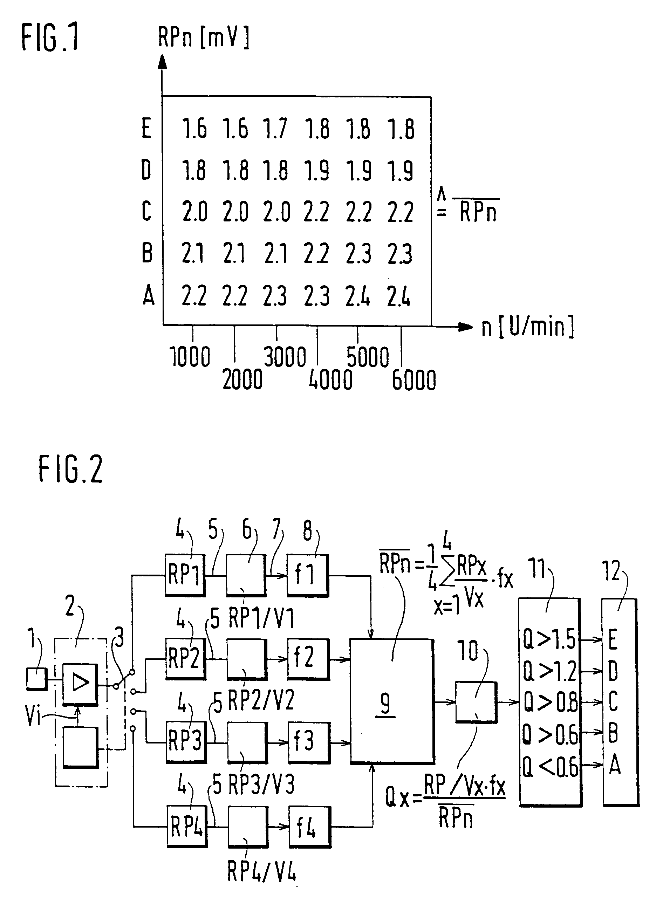

Ausführungsbeispiele der Erfindung sind in der Zeichnung dargestellt und in der nachfolgenden Beschreibung näher erläutert. Es zeigen Figur 1 ein K-Faktoren-Kennfeld und Figur 2 ein Blockschaltbild für die Auswahl des Klopferkennungsfaktors (K-Faktor).

### Beschreibung der Ausführungsbeispiele

In Figur 1 ist ein Klopferkennungsfaktorenkennfeld dargestellt und Beispielswerte für die K-Faktoren einer Brennkraftmaschine eingetragen. Dieses Kennfeld spannt sich über den normierten Referenzpegel RPn und die Drehzahl n. In dem dargestellten K-Faktoren-Kennfeld ist der normierte Referenzpegel RPn (in mV) in einzelne Bereiche A, B, C, D und E unterteilt, wobei im Bereich C der Mittelwert R̅P̅n̅ aller normierten Referenzpegel liegt. Das heißt, im Normalbetrieb bei nichtklopfendem Motor wird zur Auswahl des K-Faktors auf den Bereich C zugegriffen und nun in Abhängigkeit von der Drehzahl n der K-Faktor ausgewählt. Weicht der normierte Referenzpegel RPn eines Zylinders von dem Mittelwert R̅P̅n̅ ab, so wird je nach Art der Abweichung der K-Faktor einem anderen Bereich entnommen. Das heißt, ein Zylinder, der "lauter" gehört wird, greift auf einen anderen Bereich (zum Beispiel Bereich D) mit einem kleinen K-Faktor zu, wodurch die Klopfschwelle (K · RP) heruntergesetzt wird und unter Umständen ein Klopfen erkannt wird, obwohl die Ursachen für den größeren normierten Referenzpegel in der Anordnung des Sensors liegen.

Das Wesen der Erfindung wird nun unter Zuhilfenahme der Figur 2 und des oben gesagten zu Figur 1 erläutert. In der Figur 2 ist das Blockschaltbild für die Auswahl des K-Faktor am Beispiel einer 4-Zylinder-Brennkraftmaschine dargestellt. Ein Klopfsensor 1 erfaßt die Geräusche in den einzelnen Zylindern, die anschließend in einer Verstärkerschaltung 2 zylinderindividuell (Vi) verstärkt werden. Durch das entsprechende Schließen (beispielsweise durch Vorgabe mit der Zündfolge) eines Schalters 3 wird der jeweils erfaßte Geräuschpegel des Klopfsensors 1 an die entsprechende Auswerteschaltung für diesen Zylinder gegeben. Mit den gemessenen Klopfsignalintegralen werden über Tiefpaßfilterung 4 zylinderspezifisch die Referenzpegel RP1 bis RP4 gebildet, die nun an den Zuleitungen 5 anliegen. Im anschließenden Arbeitsschritt wird in der Stufe 6 ein normierter Referenzpegel RPn berechnet, indem die Verstärkungsfaktoren V1 bis V4 der einzelnen Zylinder herausdividiert werden. Das ist notwendig, da die Verstärkung für die einzelnen Zylinder unterschiedlich sein kann, was durch die unterschiedlichen Indizes verdeutlicht wird. Im Ergebnis dessen liegen an den Zuleitungen 7 die normierten Referenzpegel RPnl bis RPn4 der einzelnen Zylinder an. Im folgenden Arbeitsschritt wird in der Stufe 8 jeder normierte Referenzpegel mit einem zylinderindividuellen Bewertungsfaktor fl bis f4 multipliziert. Diese Bewertungsfaktoren f werden bereits in der Applikation für jeden Motortyp festgelegt und sie sind dadurch bedingt, daß die von den Klopfintegralen gebildeten Referenzpegel in Stufe 4 aufgrund des Sensor-Anbauortes bei gleichen Geräuschen unterschiedlich groß sein können. Diese Bewertungsfaktoren f sind so festgelegt, daß für jeden Zylinder der K-Faktor bei nichtklopfendem Motor dem Bereich C des K-Faktoren-Kennfeldes entnommen wird. Die weitere Auswertung erfolgt nun wie es bereits im Stand der Technik bekannt ist. Das heißt, es wird im nachfolgenden Arbeitsschritt der Stufe 9 der Mittelwert R̅P̅n̅ aller mit dem jeweiligen Faktor f multiplizierten normierten Referenzpegel RPn berechnet. Im anschließenden Arbeitsschritt der Stufe 10 wird für jeden Zylinder der Quotient Q aus normiertem Referenzpegel und Mittelwert aller normierten Referenzpegel berechnet. Im weiteren Arbeitsschritt werden in einer Stufe 11 dem ermittelten Quotienten Q jeweils einer der Richtwerte A bis E zugeordnet, so daß entsprechend dem ermittelten Wert Q der entsprechende Bereich A bis E für den Zugriff im K-Faktoren-Kennfeld festgelegt wird. Mit dem diesem Kennfeldbereich entnommenen K-Faktor wird schließlich in der Stufe 12 die Klopfschwelle eines Zylinders berechnet, und mit dem aktuellen Referenzpegel des jeweiligen Zylinders verglichen.

Die beschriebene Auswertung wird bei jeder Verbrennung durchgeführt, so daß jede Stufe mit dem aktuellen Wert abgearbeitet wird. Dabei werden insbesondere für die Mittelwertbildung R̅P̅n̅ die gemessenen Werte für die einzelnen Zylinder so lange in einem Speicher abgelegt und für die Auswertung verwendet, bis für diesen Zylinder ein neuer Meßwert vorliegt.

Die Bewertungsfaktoren f werden für die verschiedenen Motortypen in der Applikation ermittelt. Dazu wird der Motor im nichtklopfenden Bereich betrieben und die von einem Klopfsensor gelieferten Referenzpegel der verschiedenen Zylinder werden so ausgewertet, daß jedem Zylinder ein Bewertungsfaktor zugeordnet wird, welcher sicherstellt, daß bei nichtklopfendem Betrieb für alle Zylinder auf einen mittleren Bereich des Klopf-Faktoren-Kennfeld zugegriffen wird. Diese so ermittelten Bewertungsfaktoren werden abgespeichert und bleiben in der Regel für die Motorlebensdauer erhalten. Es ist aber auch möglich, für jeden Zylinder verschiedene Bewertungsfaktoren, zum Beispiel bezogen auf verschiedene Lastbereiche, festzulegen.

## Patentansprüche

1. Verfahren zur Klopferkennung für Brennkraftmaschinen mit mehreren Zylindern, wobei die Anzahl der Klopfsensoren kleiner ist als die Anzahl der Zylinder und jedem Klopfsensor mindestens ein Zylinder zugeordnet ist, wobei für jeden Zylinder ein Referenzpegel durch den dem Zylinder zugeordneten Klopfsensor, dem ein Verstärker nachgeschaltet ist, erfaßt und ein normierter Referenzpegel für jeden Zylinder durch Dividieren durch einen zylinderindividuellen Verstärkungsfaktor gebildet wird, wobei weiterhin Klopferkennungsfaktoren (K-Faktoren) zur Bestimmung der Klopfschwelle in einem Zylinder aus einem Klopferkennungs-Faktoren-Kennfeld, welches über einen normierten Referenzpegel und die Drehzahl aufgespannt ist, in der Art aufgerufen werden, daß der Quotient aus dem normierten Referenzpegel eines Zylinders und dem Mittelwert der normierten Referenzpegel aller Zylinder den Bereich im Klopferkennungs-Faktoren-Kennfeld bestimmt, aus welchem der Klopferkennungs-Faktor in Abhängigkeit von der Drehzahl entnommen wird, und wobei der normierte Referenzpegel (RPn) jedes Zylinders vor der Auswahl des Klopferkennungs-Faktors (k) mit einem Bewertungsfaktor (f) multipliziert wird, der die im Normalbetrieb ohne klopfende Verbrennung auftretenden, vom Sensoranbauort verursachten unterschiedlichen Referenzpegel ausgleicht.

2. Verfahren nach Anspruch 1, dadurch gekennzeichnet, daß der Bewertungsfaktor (f) in Abhängigkeit vom Einbauort für jeden Zylinder eines bestimmten Motors festgelegt wird.

3. Verfahren nach einem der vorherigen Ansprüche, dadurch gekennzeichnet, daß mehrere Bewertungsfaktoren (f) für jeden Zylinder in Abhängigkeit verschiedener Betriebsbedingungen der Brennkraftmaschine festgelegt werden.

4. Verfahren nach einem der vorherigen Ansprüche, dadurch gekennzeichnet, daß im Normalbetrieb der K-Faktor für jeden Zylinder dem Bereich (C) des K-Faktoren-Kennfelds entnommen wird, der dem Normalbetrieb der Maschine zugeordnet ist.

## Claims

1. Method of knock recognition for internal combustion engines with a plurality of cylinders, the number of knock sensors being smaller than the number of cylinders and each knock sensor being assigned at least one cylinder, in which method a reference level is determined for each cylinder by the knock sensor assigned to the cylinder, the sensor being followed by an amplifier, and a standardized refernce level is formed for each cylinder by dividing by a cylinder-individual gain factor, furthermore, knock recognition factors (K factors) for determining the knock threshold in a cylinder are called up from a knock recognition factor characteristic diagram, which is arranged in terms of a standardized reference level and the rotational speed, in such a way that the quotient of the standardized reference level of a cylinder and the average of the standardized reference levels of all cylinders determines the region in the knock recognition factor characteristic diagram from which the knock recognition factor is taken as a function of the rotational speed, and the standardized reference level (RPn) of each cylinder is multiplied by an evaluation factor (f) before the selection of the knock recognition factor (k), said evaluation factor (f) providing compensation for the different reference levels which occur in normal operation without knocking combustion and are caused by the sensor installation location.

2. Method according to Claim 1, characterized in that the evaluation factor (f) is fixed as a function of the installation location for each cylinder of a certain engine.

3. Method according to one of the preceding claims, characterized in that a plurality of evaluation factors (f) are fixed for each cylinder as a function of different operating conditions of the internal combustion engine.

4. Method according to one of the preceding claims, characterized in that, in normal operation, the K factor for each cylinder is taken from the region (C) of the K factor characteristic diagram which is associated with normal operation of the engine.

## Revendications

1. Procédé de détection du cliquetis d'un moteur à combustion interne à plusieurs cylindres dont le nombre des capteurs de cliquetis est inférieur au nombre des cylindres, un cylindre étant associé à au moins un capteur de cliquetis, et pour chaque cylindre on détecte un niveau de référence à l'aide du capteur de cliquetis associé à ce cylindre suivi d'un amplificateur et on forme un niveau de référence normalisé pour ce cylindre par division par un coefficient d'amplification propre au cylindre, et en outre, on appelle des coefficients de détection de cliquetis (coefficients K) pour déterminer le seuil de cliquetis d'un cylindre dans un champ caractéristique de coefficients de détection de cliquetis s'étendant sur un niveau de référence normalisé et sur la vitesse de rotation, de façon que le quotient du niveau de référence normalisé d'un cylindre et de la valeur moyenne du niveau de référence normalisé de tous les cylindres définisse la zone du champ caractéristique des coefficients de détection de cliquetis dans lequel on prend le coefficient de détection de cliquetis en fonction de la vitesse de rotation, et on multiplie le niveau de référence normalisé (RPn) de chaque cylindre avant la sélection du coefficient de détection de cliquetis (K) par un coefficient d'estimation (f) qui compense les niveaux de référence différents causés par la position de montage différente des capteurs, niveaux de référence qui existent en fonctionnement normal avec combustion sans cliquetis.

2. Procédé selon la revendication 1, caractérisé en ce que le coefficient d'estimation (f) est fixé en fonction de l'emplacement de chaque cylindre du moteur donné.

3. Procédé selon l'une des revendications précédentes, caractérisé par plusieurs coefficients d'estimation (f) pour chaque cylindre qui sont fixés en fonction des conditions de fonctionnement différentes du moteur à combustion interne.

4. Procédé selon l'une des revendications précédentes, caractérisé en ce qu'en fonctionnement normal on prend le coefficient (K) pour chaque cylindre dans la plage (C) du champ caractéristique des coefficients (K), plage qui est associée au fonctionnement normal du moteur.
